# EUROPÄISCHE PATENTSCHRIFT

(11) **EP 3 276 787 B1**
(45) Veröffentlichungstag und Bekanntmachung des Hinweises auf die Patenterteilung: **02.01.2019**
(21) Anmeldenummer: 17180900.7
(22) Anmeldetag: 12.07.2017
(51) Int. Cl.: H02J 7/14, H02J 7/34, H02J 1/10, H02J 1/08, B60R 16/033, H02M 3/04, H02J 1/12

(54) **ELEKTRISCHES BORDNETZSYSTEM FÜR KRAFTFAHRZEUGE MIT EINEM KONVERTER UND EINEM HOCHLASTVERBRAUCHER**
ON-BOARD ELECTRICAL SYSTEM FOR MOTOR VEHICLES COMPRISING A CONVERTER AND A HIGH-LOAD CONSUMER
SYSTÈME DE RÉSEAU ÉLECTRIQUE DE BORD POUR VÉHICULES À MOTEUR POURVU D'UN CONVERTISSEUR ET D'UN CONSOMMATEUR À FORTE CHARGE

(30) Priorität: 29.07.2016 DE 102016213978
(43) Veröffentlichungstag der Anmeldung: 31.01.2018
(73) Patentinhaber: Ford Global Technologies, LLC, Dearborn, MI 48126 (US)
(72) Erfinder: Mohrmann, Björn, 52072 Aachen (DE); Warm, Armin, 52072 Aachen (DE); Schmitz, Peter, 52076 Aachen (DE); Bojahr, Manuel, 52070 Aachen (DE); Spijker, Engbert, 6361 BR Nuth (NL); Eifert, Mark, 60594 Frankfurt (DE)
(74) Vertreter: Dörfler, Thomas

(56) Entgegenhaltungen:
- WO-A2-2014/053780
- DE-A1-102007 029 025
- DE-A1-102009 029 524
- DE-A1-102012 206 932
- US-A1- 2009 179 627

## Beschreibung

Die Erfindung bezieht sich auf ein elektrisches Bordnetzsystem für Kraftfahrzeuge und auf ein Verfahren zum Betreiben eines derartigen Bordnetzsystems.

Aus US 2014/0084 817 A1 ist ein Verfahren für Energie- und Leistungsmanagement in dynamischen Systemen mit Superkondensatoren bekannt. Dabei wird ein Verbraucher mit der Summe aus der Spannung einer Batterie und des Superkondensators in einem ersten Schaltzustand beaufschlagt. Im normalen Belastungszustand ist die Sekundärseite des Gleichspannungs-Gleichspannungs-Konverters mit dem Verbraucher verbunden.

Aus US 2012/0261 982 A1 ist ein Vielspannungsbordnetzsystem für ein Kraftfahrzeug bekannt. Es werden mehrere Gleichspannungs-Gleichspannungs-Konverter verwendet, denen Kondensatoren zugeordnet sind. Über Wechselschalter können unterschiedliche Betriebszustände erreicht werden.

Aus DE 10 2007 037 937 A1 ist ein Kraftfahrzeugbordnetz bekannt. Es weist drei unterschiedlichen Verbraucher und mehrere Bordnetzzweige.

Aus DE 10 2014 215 615 A1 sind ein Verfahren und Bordnetz zum Starten eines Verbrennungsmotors eines hybriden Antriebs eines Kraftfahrzeuges bekannt. Das Bordnetz weist zwei Gleichstrom/Gleichstrom-Wandler und eine Diode auf.

Aus US 2014/026 559 A1 ist ein elektrisches Bordnetzsystem mit hoher Leistung für ein Kraftfahrzeug bekannt. Es weist einen elektrischen Hochleistungsbus auf, der zumindest teilweise von einem Konverter versorgt wird, welcher seine Eingangsleistung von der Batterie des Fahrzeugs erhält. Der elektrische Hochleistungsbus kann zumindest teilweise von der Kraftfahrzeugbatterie abgekoppelt werden. Verbraucher mit hoher elektrischer Leistung, wie beispielsweise eine aktive Radaufhängung bzw. ein aktives Fahrwerk oder aktive Federung werden über den elektrischen Bus hoher Leistung versorgt.

Ein Verbraucher mit hoher elektrischer Leistung hat typischerweise eine maximale Leistungsaufnahme > 1 kW bzw. Stromaufnahme > 80 A, eine durchschnittliche Leistungsaufnahme 300 W bzw. Stromaufnahme 25 A.

Aus US 8971073 B2 sind ein System und ein Verfahren zum Überbrücken (Bypassen) von mehrstufigen Gleichspannungs-Gleichspannungs-Konvertern in Netzwerken mit Batterie bekannt. Es werden keine Kondensatoren eingesetzt.

Aus DE 10 2012 206 932 A1 ist ein Kraftfahrzeugbordnetz mit wenigstens zwei Teilnetzen bekannt. Sie sind mittels eines Gleichspannungswandlers und eines Überbrückungsschalters miteinander verbindbar.

Aus US 5,179,508 ist ein Spannungsversorgungssystem mit Batterie und einem Gleichspannungs-Gleichspannungs-Konverter bekannt. Dieser befindet sich stets im Leistungsfluss, er wird nicht überbrückt.

Aus DE 10 2012 005 993 A1 ist ein Energieversorgungs-Regel- bzw. -Steuergerät für ein Fahrzeug bekannt. Dieses weist zwei Elektrizitäts-Speichervorrichtungen und einen DC/DC-Wandler auf.

Aus DE 102 48 658 A1 ist eine Vorrichtung zur Bordnetzstabilisierung bei Stopp/Startbetrieb bekannt. Drei Energiespeicher sind mit dem Generator ausgebildet.

Aus DE 103 92 456 T5 ist eine Anordnung für die Durchführung eines Verfahrens bekannt. Bei dem Schalter handelt es sich um einen statischen Schalter, der aus einem MOSFET-Transistor besteht. Die Schaltvorrichtung wird durch eine Diode gebildet.

US 2009/179627 A1 offenbart ein Bordnetzsystem für Kraftfahrzeuge mit einem ersten Subnetz und einem zweiten Subnetz, wobei das zweite Subnetz der Versorgung eines Bremssystems dient und in Abhängigkeit des Ladezustandes eines Kondensators an das erste Subnetz gekoppelt wird.

DE 10 2009 0259524 A1 offenbart ein Bordnetzsystem für Kraftfahrzeuge bestehend aus zwei Subnetzen, die durch einen Gleichspannungswandler gekoppelt sind, wobei der Gleichspannungswandler nur in Phasen der Energierückgewinnung aktiv ist und ansonsten überbrückt wird.

WO 2014/053780 A2 offenbart ein Bordnetzsystem für Kraftfahrzeuge bestehend aus zwei Subnetzen, die durch einen Gleichspannungswandler gekoppelt sind, wobei der Gleichspannungswandler überbrückt wird, wenn der Energiespeicher des zweiten Subnetzes nicht ausreichend geladen ist.

DE 10 2007 029025 A1 offenbart ein Bordnetzsystem für Kraftfahrzeuge bestehend aus zwei Subnetzen, die durch einen Gleichspannungswandler gekoppelt sind, wobei der Gleichspannungswandler aktiviert wird, wenn Spannungsstörungen im Hauptbordnetz auftreten.

Aufgabe der Erfindung ist es, ein elektrisches Bordnetzsystem der eingangs genannten Art und der oben beschriebenen Art weiterzuentwickeln und insbesondere dahingehend auszulegen, dass ein Gleichspannungs-Gleichspannungs-Konverter überbrückt werden kann, wenn die Leistungsanforderung eines Verbrauchers hoher Leistung gering (z.B. kleiner 40% bis 60% der Nennleistung des Gleichspannungs-Gleichspannungs-Konverters) und/oder konstant (z.B. Schwankung des Stromwertes kleiner als 10% des Nennwerts der Leistung des Verbrauchers hoher Leistung) ist. Die Versorgung des Verbrauchers hoher Leistung soll jedoch über den Konverter erfolgen, wenn der Leistungsbedarf des Verbrauchers hoher Leistung hoch oder rasch ändernd (z.B. Schwankung des Stromwertes größer als 10% des Nennwerts der Leistung des Verbrauchers hoher Leistung innerhalb einer Sekunde) ist. Zudem soll rückgewonnene elektrische Energie ausschließlich dem Speicher und nicht beispielsweise der Batterie zugeführt werden, unabhängig vom Schaltzustand des Schalters.

Diese Aufgabe wird gelöst durch die Merkmale des Anspruchs 1.

Durch die Erfindung wird die Energieeffizienz des Systems erhöht, wenn der Gleichspannungs-Gleichspannungs-Konverter überbrückt ist. Es können Konverter kleiner Baugröße eingesetzt werden, beispielsweise kann anstelle eines Konverters mit 300 W Nennleistung ein Konverter für 210 W eingesetzt werden. Eine ständige Belastung und ein ständiger Anfall von Verlustwärme im Konverter finden nicht statt. Der Konverter wird nur in relativ kurzen Phasen hohen Leistungsbedarfs genutzt und nur dann fällt Verlustwärme an. Dies ist vorteilhaft, es wird Energie, insbesondere Treibstoff, eingespart.

Beispiel "Versorgung eines Fahrwerkaktuators": Maximal erforderlich Leistung im dynamischen Betrieb (stark schwankende Last, z.B. Slalom): 210W, maximal erforderliche Leistung im Konstantbetrieb (konstante Last, z.B. lange Kurvenfahrt): 300W. D.h., der DC/DC-Konverter kann statt der Auslegung für die Kurvenfahrt auf die Auslegung des Slaloms verkleinert werden, da bei der langen Kurvenfahrt der DC/DC-Konverter überbrückt werden kann.

Über die Einrichtung zum Erfassen der Leistung wird der aktuelle Leistungsbedarf des Verbrauchers hoher Leistung erfasst. Diese Einrichtung kann beispielsweise den Strom erfassen, der durch den Verbraucher hoher Leistung fließt. Man geht dann davon aus, dass die Spannung bekannt ist, beispielsweise Batteriespannung ist, und kann dann durch Multiplikation die Leistung errechnen. Man kann aber auch die Leistung über das Messen von Strom und Spannung erfassen. Man kann auch die tatsächlich am Verbraucher anliegende Spannung erfassen und damit den aktuellen Spannungsabfall berechnen, was wiederum ermöglicht, den Strom und entsprechend die Leistung zu errechnen.

Aufgrund der Einrichtung zum Erfassen der Leistung ist es möglich, ein Steuersignal zu erzeugen, dass der Steuerschaltung, auch Steuergerät genannt, zugeleitet wird. Ist die aktuell gemessene Leistung geringer als der Schwellenwert, wird der Schalter in die erste Schaltstellung bewegt bzw. in dieser gehalten. Ist jedoch die Leistung höher, wird der Schalter in der zweiten Schaltstellung gehalten bzw. in diese gebracht. Wird eine sich rasch ändernde Leistung erfasst, beispielsweise schwankt der Stromwert um mehr als 10% des Nennwerts der Leistung des Verbrauchers hoher Leistung mehr als zweimal und insbesondere häufiger innerhalb einer Sekunde, so wird ebenfalls die zweite Schaltstellung gewählt.

Die Erfindung ermöglicht ein Rückgewinnen elektrischer Energie, wenn der Verbraucher hoher Leistung mechanisch durch äußere Kräfte bewegt wird und als Generator wirkt. Dies ist der Fall, wenn er beispielsweise als Elektromotor ausgebildet ist. In einem aktiven Fahrwerk wirken auf die Elektromotoren, die für die Einstellung von Fahrwerkskomponenten zuständig sind, auch rücktreibende, zumeist von der Straße ausgeübte Kräfte, die die Elektromotoren verstellen, was wiederum zur Erzeugung einer elektrischen Leistung führt. Auf diese Weise findet ein Rekuperieren statt. Unabhängig von der Schaltstellung wird diese Energie dem Speicher zugeführt.

Dieses Rückgewinnen elektrischer Energie erfolgt erfindungsgemäß so, dass die rückgewonnene Energie stets auf den Speicher geleitet wird. Durch die Dioden wird erreicht, dass der Stromfluss stets zum Speicher, der vorzugsweise ein Superkondensator ist, gerichtet ist und die elektrische Energie dort ankommt und gespeichert wird. Wenn sich der Schalter in der ersten Schaltstellung befindet, also eine Überbrückung des Konverters stattfindet, sperrt die obere Diode einen Rückstrom zur Batterie hin. Die untere Diode ist in diesem Fall in Durchflussrichtung betrieben, sie erlaubt einen Stromfluss hin zum Speicher. In der zweiten Schaltstellung schließt die Schaltzunge die untere Diode kurz und so fließt der regenerative Strom unmittelbar in den Speicher. Die obere Diode wird in diesem Fall nicht benötigt.

Der Wirkungsgrad eines DC/DC-Konverters ändert sich abhängig von seiner Ausgangsleistung und -spannung. Wenn ein DC/DC-Konverter für eine Last oder für einen Satz von Lasten mit verschiedenen Leistungsbedarfen bzw. Ebenen eingesetzt wird, kann es immer sein, dass er in einem Betriebsbereich mit niedrigem Wirkungsgrad arbeitet. Als Lösung kann ein DC/DC-Konverter überbrückt bzw. ausgeschaltet werden, wenn er in einem Bereich niedrigen Wirkungsgrads betrieben wird. In dem Fall werden die Lasten, die er versorgen soll, von einem besser geeignetem DC/DC-Konverter mit höherem Wirkungsgrad oder von der primären elektrischen Leistungsquelle direkt versorgt. Die primäre Quelle kann aus einer Lichtmaschine und Batterie gebildet werden, oder sie kann ebenfalls ein DC/DC-Konverter sein. Das ist häufig der Fall bei Hybrid-Fahrzeugen. Die Ausgänge von den DC/DC-Konvertern können mit einem großen Kondensator, oder mit einer Bank von UltraCaps, oder mit einer Zusatzbatterie verbunden sein.

Ein Problem bei der Umschaltung von einer Last auf mehrere Versorgungsquellen ist, dass die Last Spannungssprünge erfährt, die ihre Funktion negativ beeinflussen können. Lösungen zu diesem Problem sind auch ein Teil des Konzepts. Die Spannungen von den Quellen können erst abgeglichen werden, bevor der Schaltvorgang stattfindet, oder eine Methode zum Entfernen von Leistungsquellen durch Parallelbeschaltung und Einstellung der Ausgangsspannungen kann eingesetzt werden.

Vorgeschlagen wird eine Architektur mit vorzugsweise mehreren DC/DC-Konvertern oder Leistungsquellen, eine Strategie zur Auswahl der am besten geeigneten Quelle abhängig von ihrem Wirkungsgrad, und eine Regelstrategie, die einen Übergang zwischen Quellen ohne störende Spannungsänderungen erlaubt. Das Konzept ist für eine Anwendung in Fahrzeugen mit konventionellen Antrieben, Hybrid-Antrieben und elektrischen Antrieben geeignet. Es kann auch für Bordnetze in Flugzeugen und Schiffen eingesetzt werden.

Erfindungsgemäß ist der Schalter ein Wechselschalter, er hat zumindest eine Schaltzunge, die mit dem Verbraucher hoher Last verbunden ist. Er hat einen ersten Schaltkontakt, der mit der Sekundärseite des Konverters verbunden ist und einen zweiten Schaltkontakt, der mit der Primärseite des Konverters verbunden ist. Vorzugsweise sind entweder zwei Schaltzungen vorgesehen, so dass beide Pole der Sekundärseite und der Primärseite geschaltet werden können, oder es ist jeweils ein Pol der Primärseite und ein Pol der Sekundärseite miteinander verbunden, zweckmäßigerweise ist diese Verbindung an Masse gelegt. Im letzteren Fall ist nur ein Wechselschalter mit einer Schaltzunge notwendig.

Bei dem Verfahren zum Steuern eines elektrischen Bordnetzes, wie es als solches oben beschrieben wurde, wird ständig bzw. in kurzen Zeitabständen (Sampling) der Leistungsbedarf des Verbrauchers hoher Leistung mittels einer Einrichtung zum Erfassen der Leistung ermittelt, das so gewonnene Signal über den aktuellen Leistungsbedarf des Verbrauchers hoher Leistung wird dem Steuergerät zugeleitet. In dem Steuergerät ist ein Schwellenwert definiert. Wird dieser Schwellenwert unterschritten, ist also der aktuelle Leitungsbedarf geringer als der Schwellenwert, so betätigt die Steuerschaltung den Schalter in die erste Schaltposition. Ist jedoch der Leistungsbedarf höher als der Schwellenwert, betätigt die Steuerung den Schalter in die zweite Schaltstellung. Dies tut sie auch, wenn der Leistungsbedarf des Verbrauchers hoher Leistung in kurzen Zeitabschnitten schwankt, beispielsweise innerhalb einer Sekunde um mehr als 10% seiner Nennleistung.

Weitere Merkmale und Vorteile der Erfindung ergeben sich aus den weiteren Ansprüchen sowie der nun folgenden Beschreibung eines nicht einschränkend zu verstehenden Ausführungsbeispiels der Erfindung, das unter Bezugnahme auf die Zeichnung näher erläutert wird. Der Schutzumfang der vorliegenden Erfindung wird durch die Ansprüche definiert. Weitere Beispiele der vorliegende Offenbarung, die nicht durch die Ansprüche abgedeckt sind, liegen nicht im Schutzumfang der vorliegenden Erfindung. In dieser Zeichnung zeigt:
Fig. 1 ein elektrisches Schaltschema eines batteriegestützten Bordnetzes mit normalen Verbrauchern, einem Konverter und je einem Verbraucher hoher Leistung in einem Subsystem,
Fig. 2 das Schaltschema wie Fig. 1, jedoch nun mit zwei anderen elektrischen Energiequellen und
Fig. 3 eine prinzipielle Darstellung einer Schaltung wie in Fig. 1 oder 2 für ein Überbrücken durch Spannungsregeln, jedoch nicht Teil des beanspruchten Schutzumfangs.

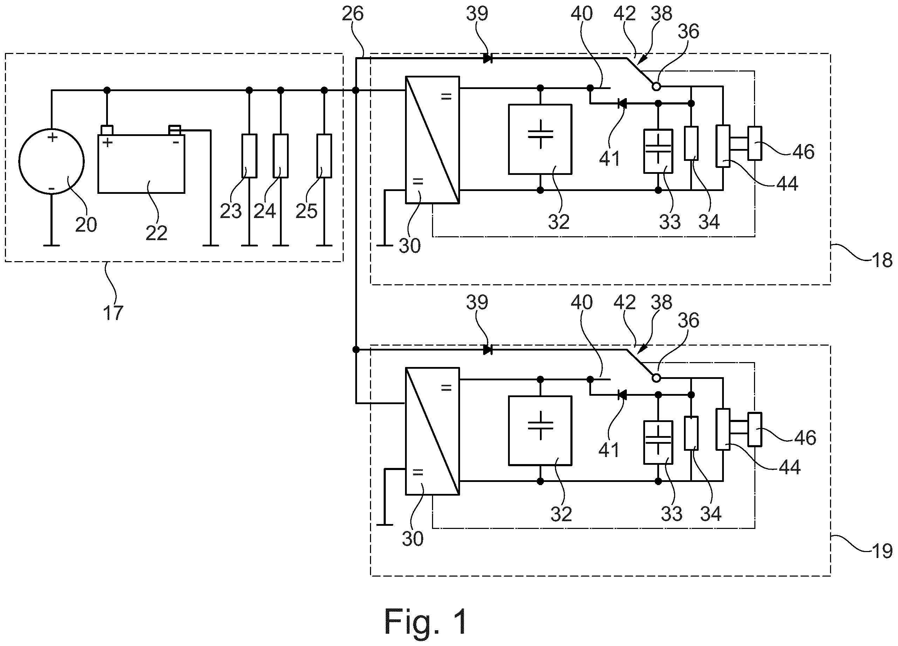

Figur 1 zeigt eine elektrische Schaltung aufgeteilt in drei Bereiche 17, 18 und 19. In einem ersten Bereich 17, der auch Primärbereich oder Verteilungsnetzwerk genannt wird, befindet sich eine Lichtmaschine 20. Sie ist parallel zu einer Batterie 22 geschaltet. Dem Fachmann sind die üblichen Vorrichtungen, wie beispielsweise ein Regler zwischen Lichtmaschine 20 und Batterie 22 bekannt, aus Vereinfachungsgründen ist ein derartiger Regler hier nicht eingezeichnet. Er sorgt dafür, dass eine Verbindung mit und ein Laden der Batterie 22 nur dann stattfindet, wenn die Lichtmaschine 20 mit ausreichender Drehzahl betrieben wird. Im Primärbereich sind die Batterie 22 und zudem noch drei normale Verbraucher 23 bis 25 vorgesehen. Sie können über nicht dargestellte Schalter ein- und ausgeschaltet werden. Bei diesen Verbrauchern 23 bis 25 handelt es sich beispielsweise um Scheibenwischermotoren, Lichtquellen, Elektromotoren für die Sitzverstellung und dergleichen.

Über eine Verbindungsleitung 26 ist der Primärbereich 17 mit den Bereichen 18 und 19, nämlich einem oberen Subsystem und einem unteren Subsystem, verbunden. Diese sind baugleich. Im Folgenden wird daher das obere Subsystem beschrieben. In diesem ist ein Gleichspannungs-Gleichspannungs-Konverter 30, auch DC/DC-Konverter oder im Folgenden nur Konverter 30 genannt, angeordnet, er hat eine Primärseite mit zwei Anschlusspolen, die in der Figur links ist, und eine Sekundärseite mit zwei Anschlusspolen, die in der Figur rechts ist. Die Nennleistung des Gleichspannungs-Gleichspannungs-Konverters 30 beträgt beispielweise 300 W. Ein unterer Pol der Primärseite und ein unterer Pol der Sekundärseite sind miteinander verbunden und zudem auf Massepotential gelegt. Die Primärseite ist parallel zur Batterie 22 geschaltet. Parallel zur Sekundärseite ist ein Speicher 32 geschaltet, hier handelt es sich beispielsweise um einen Superkondensator. Der Vorteil eines Superkondensators liegt in der schnellen Aufladung und in geringeren Verlusten. Weiterhin befindet sich ein Verbraucher hoher Leistung 34, auch Hochlastverbraucher genannt, im Subsystem 26. Hier handelt es sich beispielsweise um einen Elektromotor hoher Leistung, wie er für aktive Fahrwerke eingesetzt wird. Er ist mit einem unteren Anschluss an Masse gelegt, mit seinem anderen Anschluss liegt er an einer Schaltzunge 36 eines Schalters 38 an. Dieser hat einen ersten, unteren Schaltkontakt 40, der mit dem oberen Pol der Sekundärseite sowie mit dem Speicher 32 verbunden ist. Er hat zudem einen zweiten, oberen Schaltkontakt 42, der über eine obere Diode 39 mit dem oberen Pol der Primärseite verbunden ist. Anders ausgedrückt ist die obere Diode 39 an die Verbindungsleitung 26 angeschlossen.

Die obere Diode 39 ist so gepolt, dass sie eine Spannungsversorgung des Verbrauchers hoher Leistung 34 unter Umgehung des Konverters 30 direkt aus der Batterie 22 ermöglicht. Im gezeigten Ausführungsbeispiel ist das Massepotential auf minus und liegt die Verbindungsleitung 26 auf plus. Demgemäß ist die Anode der oberen Diode 39 mit der Verbindungsleitung 26 verbunden, die Kathode ist mit dem zweiten Schaltkontakt 42 in Verbindung. Dadurch kann ein Stromfluss nur zum Verbraucher hoher Leistung 34, aber nicht in Rückrichtung stattfinden. Eine vom Verbraucher hoher Leistung 34 erzeugte elektrische Energie wird also durch die obere Diode 39 gesperrt und kann nicht zur Batterie 22 gelangen.

Zwischen dem ersten Schaltkontakt 40 und der Schaltzunge 36 ist eine untere Diode 41 angeordnet. Sie wird kurzgeschlossen, wenn sich die Schaltzunge 36 in der hier nicht dargestellten zweiten Schaltposition (ohne Überbrücken des Konverters 30) befindet. Die untere Diode 41 ist so orientiert, dass sie bei normaler Spannungsversorgung die Versorgung des Verbrauchers hoher Leistung 34 aus dem Speicher 32 bzw. dem Konverter 30 sperrt, aber bei regenerativ anfallender elektrischer Leistung im Durchlassbetrieb arbeitet, diese also an den Speicher 32 leitet.

Dem Verbraucher hoher Leistung 34 ist eine Einrichtung zur Leistungserfassung 44 zugeordnet. Sie erfasst den aktuellen Leistungsbedarf des Verbrauchers hoher Leistung 34. Dies kann beispielsweise dadurch erfolgen, dass der durch den Verbraucher 34 fließende Strom erfasst wird und davon ausgegangen wird, dass die Spannung im Wesentlichen der Ausgangsspannung des Konverters 30 bzw. der Batterie 22 entspricht, also z.B. bei 12V liegt, wie hier eingezeichnet ist. Dann kann die aktuelle Leistung durch Multiplikation errechnet werden. Es kann aber auch zusätzlich die Spannung, die tatsächlich am Verbraucher hoher Leistung 34 anliegt, gemessen werden, so dass eine verbesserte Leistungserfassung möglich ist. Es kann aber auch über nur eine Spannungsmessung abgeschätzt werden, welcher Strom aktuell durch den Verbraucher hoher Leistung 34 fließt, da die tatsächlich am Verbraucher hoher Leistung 34 anliegende Spannung davon abhängt, wie hoch der durch diesen Verbrauch hoher Leistung 34 fließende Strom ist.

Parallel zum Verbraucher hoher Leistung 34 kann noch ein weiterer Energiespeicher 33, z.B. ein Kondensatormodul vorgesehen sein, entweder zusätzlich oder in einem nicht beanspruchten Beispiel als Ersatz für den Energiespeicher 32.

Weiterhin ist eine Steuerschaltung 46 im Subsystem 26 vorgesehen. Sie hat die Aufgabe, die Schaltstellung der Schaltzunge 36 zu steuern, siehe gestrichelte Linie. Sie erhält ihr Eingangssignal aus der Einrichtung zur Leistungserfassung 44. In der Steuerschaltung 46 ist ein Schwellenwert für die Leistung vorgegeben. Weiterhin erfasst die Steuerschaltung 46 eine Änderung der Leistung über die Zeit, beispielsweise durch Abfragen des aktuellen Leistungswertes (Sampling) in gewissen, kurzen Zeitabständen. Solange der Leistungsbedarf unterhalb des Schwellenwertes liegt, wird die in der Figur obere, erste Schaltstellung gewählt, die in der Figur als geschaltet dargestellt ist. Hierbei ist der Konverter 30 unter Zwischenschaltung der im Versorgungsweg leitenden oberen Diode 39 überbrückt, es erfolgt ein Bypass des Konverters 30. Ist jedoch der aktuelle Leistungsbedarf des Verbrauchers hoher Leistung 34 oberhalb des Schwellenwertes betätigt die Steuerschaltung 46 den Schalter 38 in die zweite Schaltposition, die in der Figur nicht als geschaltet dargestellt ist, dann ist die Schaltzunge 36 mit der Sekundärseite des Konverters und dem Speicher 32 verbunden.

Der Schwellenwert liegt vorzugsweise bei 40 bis 60% der Nennleistung des Verbrauchers hoher Leistung 34.

Das Steuergerät 46 entscheidet, welche elektrische Leistungsquelle eine Last versorgt. Die Leistungsquellen sind entweder die Batterie 22, die Lichtmaschine 20 (Generator) oder ein DC/DC-Konverter. Jeder kann wahlweise mit einem großen Kondensator, UltraCapacitor oder Batterie am Ausgang permanent verbunden werden.

Zwei Kriterien werden vom Steuergerät 46 berücksichtigt, um zu entscheiden, welche Leistungsquelle für die Versorgung eines Verbrauchers zu wählen ist:
a. Die Entscheidung wird vorgenommen, um die Quelle mit dem höchsten Wirkungsgrad für die geforderte Leistung zu wählen, falls diese Quelle ausreichend dimensioniert ist, um die geforderte Leistungsspitzen zu versorgen.
b. Falls ein Verbraucher hohe Leistungsspitzen fordert, kann das Steuergerät 46 eine Quelle auswählen, die solche Spitzen mit einer größeren Wahrscheinlichkeit versorgen kann. Als Beispiel: eine Lichtmaschine und herkömmliche Bleibatterie kann hohe Spitzenströme nicht immer versorgen, aber eine Leistungsquelle, die aus einem DC/DC-Konverter und einem UltraCapacitor besteht, kann hohe Spitzenströme besser und zuverlässiger versorgen. Deswegen wird eine solche Quelle gewählt, wenn bestimmte Verbraucher aktiviert werden.

Wenn sich die Leistung, die der Verbraucher hoher Leistung 34 abruft, in kurzen Zeitabständen ändert, beispielsweise mehr als zweimal und insbesondere häufiger innerhalb von einer Sekunde mehr als 10% der Nennleistung des Verbrauchers hoher Leistung 34 variiert, wird auch die zweite Schaltstellung gewählt. Vorzugsweise wird auf eine zweimalige und insbesondere häufigere Änderung innerhalb von einer halben oder einer Zehntel-Sekunde von mehr als 10% der Nennleistung des Verbrauchers hoher Leistung 34 abgestellt.

Insbesondere im Fall von einem Hybrid-Fahrzeug ist es möglich, mehrere DC/DC-Konverter als primäre Leistungsquelle zu haben. Das ist zum Beispiel der Fall, wenn das Fahrzeug ein Plug-In-Hybrid oder BEV ist, und das Niederspannungsnetz vom Hausnetz (Steckdose) oder von einem Antriebssystem versorgt wird. In dem Fall wählt das Steuergerät 46 die Quelle mit dem höchsten Wirkungsgrad für die geforderte Leistung.

Die geforderte Leistung kann durch gemessene Spannung und Strom berechnet werden. Sie kann auch mit einem Feed-Forward-Ansatz erkannt werden. In diesem Fall überwacht das Steuergerät 46 die Aktivierung von einem oder mehreren Verbrauchern. Wenn ein Verbraucher aktiviert wird, wird seine Last, die schon bekannt und hinterlegt ist, verwendet um zu entscheiden, welche elektrische Leistungsquelle am besten geeignet ist. Diese Methode hat die Vorteile, dass sie keine zusätzlichen Sensoren benötigt, und keine Zeit notwendig ist, um die Leistung zu berechnen.

Abhängig von der Entscheidung des Steuergeräts 46 werden eine oder mehrere Leistungsquellen gewählt. Abhängig von der gewählten Ausführung des Konzepts, geschieht das durch Überbrücken mit einem mechanischen oder Halbleiter-Schalter oder durch die Anhebung der Ausgangsspannung einer ausgewählten Quelle, wenn die Quellen parallel geschaltet sind, wie oben dargestellt. Wenn eine Quelle so ausgewählt ist, ist es ebenfalls möglich, die Ausgangsspannungen der verbleibenden Quellen zu senken.

Falls eine Quelle durch die Überbrückung einer oder mehrerer Quellen mit einem mechanischen oder Halbleiter-Schalter abgeschaltet wird, kann die Ausgangsspannung vorher eingestellt werden, damit die Last minimale oder keine Änderung der Versorgungsspannung erfährt. Die Ausgangsspannung der alten Quellen kann ebenfalls eingestellt werden, damit der Übergang glatt verläuft. Nachdem der Übergang stattgefunden hat, kann die Ausgangspannung der ausgewählten Quelle zu einer optimalen Spannung geregelt werden. Diese Spannung kann optimal bezüglich Wirkungsgrad, Lebensdauer von elektrischen Verbrauchern oder anderen Kriterien ausgewählt werden. Beim Regeln der Spannung soll der Spannungs-Zeit-Gradient möglichst so ausgewählt werden, dass die Funktionen der Verbraucher nicht gestört werden. Nachdem der Übergang stattgefunden hat, kann eine Leistungsquelle, die überbrückt würde, komplett ausgeschaltet werden, um Verluste durch Leerlaufleistung zu vermeiden.

Figur 1 zeigt ein elektrisches Bordnetzsystem für Kraftfahrzeuge mit einer Batterie 22 und einem Konverter 30, der auf einer Primärseite mit der Batterie 22 und auf einer Sekundärseite unter Bildung eines Subnetzes mit einem Speicher 32 und über einen Schalter 38 schaltbar mit einem Hochlastwiderstand 34 verbunden ist. Der Schalter 38 hat eine Schaltzunge 36, die mit dem Hochlastverbraucher 34 verbunden ist, einen ersten Schaltkontakt 40, der mit dem Speicher 32 und einen zweiten Schaltkontakt 42, der über eine obere Diode 39 mit der Primärseite verbunden ist. Der Hochlastverbraucher 34 ist in einer ersten Schaltstellung über die obere Diode 39 mit der Primärseite und in einer zweiten Schaltstellung mit dem Speicher 32 und der Sekundärseite verbunden. Zwischen der Schaltzunge 36 und dem ersten Schaltkontakt 40 ist eine untere Diode 41 geschaltet. Ein Steuergerät 46 steuert und betätigt die Schaltstellung des Schalters 38 zwischen der ersten und der zweiten Schaltstellung. Eine Einrichtung zum Erfassen der aktuellen elektrischen Leistung 44 des Hochlastverbrauchers 34 ist dem Hochlastverbraucher 34 zugeordnet und ausgangsseitig mit dem Steuergerät 46 verbunden.

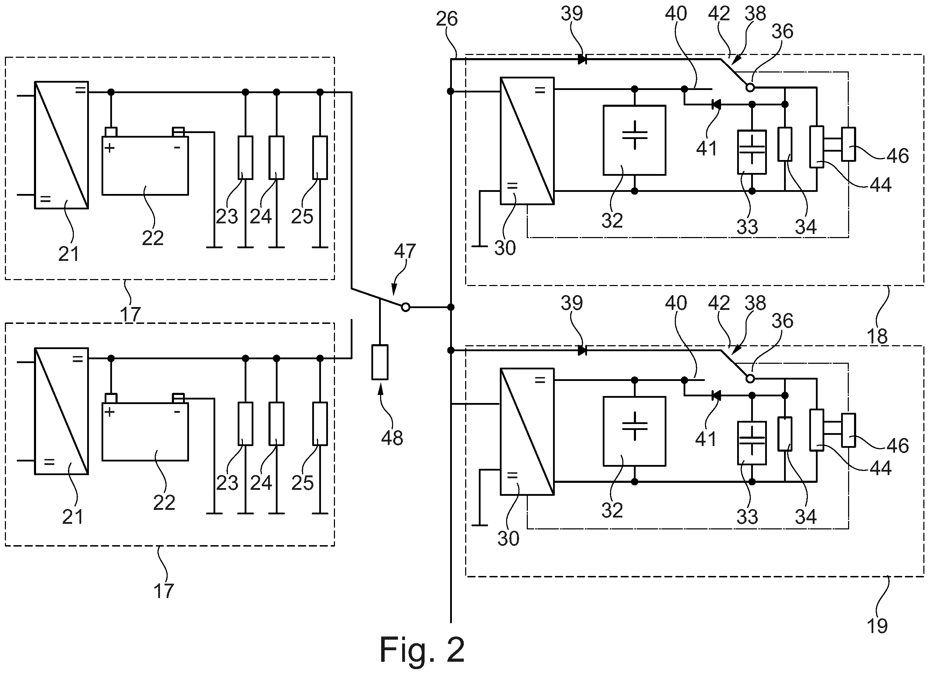

Fig. 2 stimmt mit Fig. 1 überein mit folgenden Ausnahmen: Statt der Versorgung des 12V Bordnetzes mittels der Lichtmaschine 20 erfolgt nun die Versorgung wahlweise über einen oberen oder einen unteren DC/DC-Konverter 21, wie es z.B. bei Hybrid- und Elektrofahrzeugen der Fall ist. Der jeweilige Konverter 21 wird über einen Schalter 47 mit der Verbindungsleitung 26 verbunden. Diesen Schalter 47 steuert eine Steuereinrichtung 48, für die das zum Steuergerät 44 Gesagte gilt.

Wenn ein DC/DC-Konverter überbrückt oder abgekuppelt wird, müssen die Lasten, die er versorgt, immer von einem zweiten DC/DC-Konverter oder von der primären elektrischen Leistungsquelle versorgt werden. Wie oben beschrieben, kann die primäre Quelle aus einer Lichtmaschine und Batterie gebildet werden, oder sie kann ein DC/DC-Konverter sein, der vom Hochspannungssystem versorgt ist. Es gibt zwei grundsätzliche Methoden, einen DC/DC-Konverter aus der Versorgung zu entfernen, um den Wirkungsgrad vom gesamten System bzw. Fahrzeug zu verbessern.

Wie in Fig. 1 und 2 dargestellt, kann ein DC/DC-Konverter aus der Versorgung mit einem herkömmlichen Schalter entfernt werden. In dem Fall soll er bevorzugt komplett ausgeschaltet werden, um Leerlaufverluste zu vermeiden. Entweder die primäre elektrische Leistungsquelle oder ein zweiter DC/DC-Konverter wird in dem Fall die Versorgung übernehmen. Um zu vermeiden, dass die Last Spannungsschwankungen erfährt wenn ein DC/DC-Konverter entfernt wird, wird der neue DC/DC-Konverter oder die primäre Leistungsquelle bevorzugt so gesteuert, dass die Spannung an der Last gleich bleibt, wenn der Übergang stattfindet. Falls die primäre Leistungsquelle so gesteuert wird, wird er möglichst langsam zu der neuen Spannung gesteuert, um zu vermeiden, dass die restlichen Verbraucher Spannungsschwankungen erfahren. Falls die primäre Leistungsquelle die Versorgung übernimmt, kann er anschließend langsam zurück zu seiner ursprünglichen Spannung geregelt werden.

Figur 1 und 2 zeigen konventionelle Schalter, die einen DC/DC-Konverter überbrücken. Bipolar-Transistoren oder MOSFETs können ebenfalls als Schalter dienen, wenn ein DC/DC-Konverter so überbrückt wird.

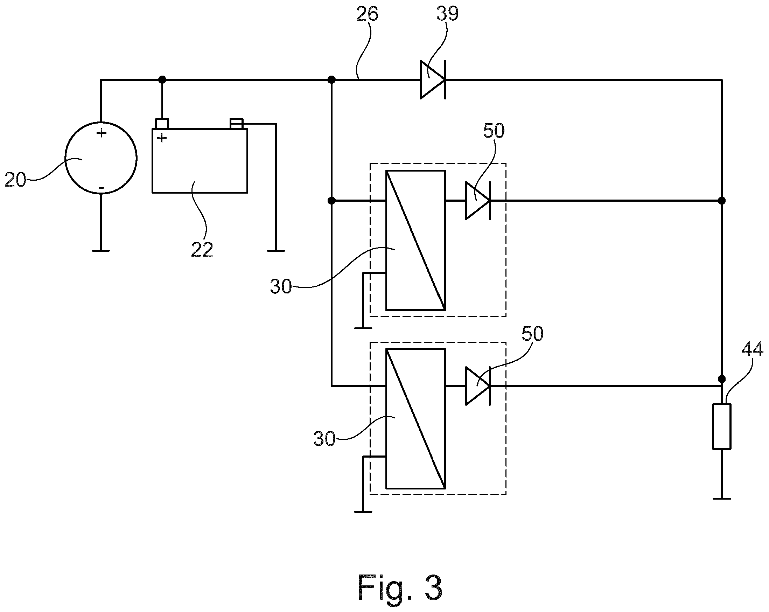

Fig. 3 zeigt als nicht beanspruchtes Beispiel eine Methode, einen DC/DC-Konverter aus der Versorgung aktiv zu entfernen. Es sind zwei unterschiedliche elektrische Leistungsquellen, die Konverter 30 (oben) bzw. 30 (unten) parallel geschaltet. Die Einstellung der Ausgangsspannungen dieser Konverter 30 erfolgt wie oben beschrieben und unter Berücksichtigung der folgenden Überlegungen:
Jeder DC/DC-Konverter 30 hat eine Diode 50, die mit einem seiner beiden Ausgangspole verbunden ist und verhindert, dass Strom in den DC/DC-Konverter fließt, wenn die Spannung der primären elektrische Leistungsquelle oder die Ausgangsspannung eines zweiten DC/DC-Konverters größer ist als seine eigene Ausgangsspannung. In diesem Fall wird ein DC/DC-Konverter aus der Versorgung entfernt, wenn die Ausgangsspannung von der primären Quelle oder die Ausgangsspannung eines zweiten DC/DC-Konverters größer ist als seine Ausgangsspannung. In diesem Fall wird ein Konverter effektiv aus der Versorgung genommen, als ob er mit einem Schalter mit der Last verbunden ist. Diese Methode hat folgenden Vorteil: Wenn die gewählte Quelle (primäre Quelle oder zweiter DC/DC-Konverter) gesättigt wird (ihre höchste Leistung erreicht), sinkt die Ausgangsspannung automatisch. In diesem Fall übernimmt die verbleibende Quelle die Versorgung der Last, ohne dass es eine Unterbrechung in der Stromzufuhr oder eine schnelle Änderung der Spannung an der Last gibt.

## Patentansprüche

1. Elektrisches Bordnetzsystem für Kraftfahrzeuge, insbesondere Pkws, mit einer Batterie (22), mit einer für das Aufladen der Batterie (22) vorgesehenen Lichtmaschine (20), mit mindestens einem Verbraucher (23-25), der schaltbar mit der Batterie (22) verbunden ist, und mit einem Gleichspannungs-Gleichspannungs-Konverter (30), der auf einer Primärseite mit der Batterie (22) und auf einer Sekundärseite unter Bildung eines Subnetzes mit einem Speicher (32) und über einen Schalter (38) schaltbar mit einem Hochlastverbraucher (34), verbunden ist,
**dadurch gekennzeichnet, dass**
der Schalter (38) eine Schaltzunge (36) aufweist, die mit dem Hochlastverbraucher (34) verbunden ist, dass der Schalter (38) einen ersten Schaltkontakt (40) aufweist, der mit dem Speicher (32) und einem Pol der Sekundärseite verbunden ist, dass der Schalter (38) einen zweiten Schaltkontakt (42) aufweist, der über eine erste Diode (39) mit einem Pol der Primärseite verbunden ist, wobei der Hochlastverbraucher (34) in einer ersten Schaltstellung über die erste Diode (39) mit der Primärseite und in einer zweiten Schaltstellung mit dem Speicher (32) und der Sekundärseite verbunden ist, dass die erste Diode (39) einen Stromfluss von der Batterie (22) zum Hochlastverbraucher (34) durchlässt, aber einen Stromfluss in Gegenrichtung sperrt, dass zwischen der Schaltzunge (36) und dem ersten Schaltkontakt (40) eine zweite Diode (41) geschaltet ist, dass die zweite Diode (41) einen Stromfluss vom Speicher (32) zum Hochlastverbraucher (34) sperrt, aber einen Stromfluss in Gegenrichtung durchlässt, dass ein Steuergerät (46) vorgesehen ist, das dazu eingerichtet ist, die Schaltstellung des Schalters (38) zwischen der ersten und der zweiten Schaltstellung zu steuern und zu betätigen, und dass eine Einrichtung zum Erfassen der aktuellen elektrischen Leistung (44) des Hochlastverbrauchers (34) vorgesehen ist, die dem Hochlastverbraucher (34) zugeordnet ist und ausgangsseitig mit dem Steuergerät (46) verbunden ist.

2. Elektrisches Bordnetzsystem nach Anspruch 1,
**dadurch gekennzeichnet, dass**
einer der beiden Anschlüsse der Primärseite mit einem der beiden Anschlüsse der Sekundärseite des Konverters (30) verbunden ist.

3. Elektrisches Bordnetzsystem nach einem der vorangegangenen Ansprüche
**dadurch gekennzeichnet, dass**
in dem Steuergerät (46) mindestens eine Schaltschwelle implementiert ist, und dass das Steuergerät (46) dazu eingerichtet ist, den Schalter (38) in der ersten Schaltstellung zu positionieren, wenn der Leistungsbedarf des Hochleistungsverbrauchers (34) kleiner als 40 bis 60% der Nennleistung ist und in der zweiten Schaltstellung zu positionieren, wenn der Leistungsbedarf größer als 40 bis 60% der Nennleistung ist oder sich innerhalb einer Sekunde zweimal um mehr als 10% der Nennleistung ändert.

4. Elektrisches Bordnetzsystem nach Anspruch 1,
**dadurch gekennzeichnet, dass**
einer der beiden Anschlüsse der Primärseite mit einem der beiden Anschlüsse der Sekundärseite des Konverters (30) verbunden ist, und dass die Verbindung an Masse gelegt ist.

5. Elektrisches Bordnetzsystem nach Anspruch 1, **dadurch gekennzeichnet, dass** in dem Steuergerät (46) mindestens eine Schaltschwelle implementiert ist, und dass das Steuergerät (46) dazu eingerichtet ist, den Schalter (38) in der ersten Schaltstellung zu positionieren, wenn der Leistungsbedarf des Hochleistungsverbrauchers (34) kleiner als 40 bis 60% der Nennleistung ist und in der zweiten Schaltstellung zu positionieren, wenn der Leistungsbedarf größer als 40 bis 60% der Nennleistung ist oder sich innerhalb einer Sekunde mehr als zweimal um mehr als 10% der Nennleistung ändert.

## Claims

1. On-board electrical system for motor vehicles, in particular passenger cars, comprising a battery (22), comprising a generator (20) which is provided for charging the battery (22), comprising at least one consumer (23-25) which is connected to the battery (22) in a switchable manner and comprising a DC voltage/DC voltage converter (30) which, on a primary side, is connected to the battery (22) and, on a secondary side, is connected to a high load consumer (34) so as to form an electrical subsystem with a storage means (32) and such that it can be switched by means of a switch (38),
**characterized in that**
the switch (38) has a switching tongue (36) which is connected to the high-load consumer (34), **in that** the switch (38) has a first switching contact (40) which is connected to the storage means (32) and to a pole of the secondary side, **in that** the switch (38) has a second switching contact (42) which is connected to a first pole of the primary side via a first diode (39), with the high-load consumer (34), in a first switching position, being connected to the primary side via the first diode (39) and, in a second switching position, being connected to the storage means (32) and the secondary side, **in that** the first diode (39) transmits a current flow from the battery (22) to the high-load consumer (34), but blocks a current flow in the opposite direction, **in that** a second diode (41) is connected between the switching tongue (36) and the first switching contact (40), **in that** the second diode (41) blocks a current flow from the storage means (32) to the high-load consumer (34) but transmits a current flow in the opposite direction, **in that** a controller (46) is provided, which controller is configured to control and operate the switching position of the switch (38) between the first and the second switching position, and **in that** a device for detecting the actual electrical power (44) of the high-load consumer (34) is provided, which device is associated with the high-load consumer (34) and is connected at the output end to the controller (46).

2. On-board electrical system according to Claim 1,
**characterized in that**
one of the two connections of the primary side is connected to one of the two connections of the secondary side of the converter (30).

3. On-board electrical system according to either of the preceding claims,
**characterized in that**
at least one switching threshold is implemented in the controller (46), and **in that** the controller (46) is configured to position the switch (38) in the first switching position when the power requirement of the high-power consumer (34) is less than 40 to 60% of the rated power, and to position the switch (38) in the second switching position when the power requirement is greater than 40 to 60% of the rated power or changes twice by more than 10% of the rated power within one second .

4. On-board electrical system according to Claim 1,
**characterized in that**
one of the two connections of the primary side is connected to one of the two connections of the secondary side of the converter (30), and **in that** the connection to ground is made.

5. On-board electrical system according to Claim 1,
**characterized in that**
at least one switching threshold is implemented in the controller (46), and **in that** the controller (46) is configured to position the switch (38) in the first switching position when the power requirement of the high-power consumer (34) is less than 40 to 60% of the rated power, and to position the switch (38) in the second switching position when the power requirement is greater than 40 to 60% of the rated power or changes more than twice by more than 10% of the rated power within one second.

## Revendications

1. Système de réseau électrique de bord pour véhicules à moteur, en particulier pour voitures particulières, comprenant une batterie (22), un générateur (20) prévu pour charger la batterie (22), au moins un consommateur (23-25) qui est relié de manière commutable à la batterie (22) et un convertisseur continu/continu (30) qui est relié de manière commutable sur un côté primaire à la batterie (22) et sur un côté secondaire à un accumulateur (32) en formant un sous-réseau et par l'intermédiaire d'un commutateur (38), à un consommateur à forte charge (34),
**caractérisé en ce que** le commutateur (38) comporte une languette de commutateur (36) qui est reliée au consommateur à forte charge (34), **en ce que** le commutateur (38) comporte un premier contact de commutation (40) qui est relié à l'accumulateur (32) et à un pôle du côté secondaire, **en ce que** le commutateur (38) comporte un deuxième contact de commutation (42) qui est relié à un pôle du côté primaire par l'intermédiaire d'une première diode (39), dans lequel le consommateur à forte charge (34) est relié au côté primaire à une première position de commutation par l'intermédiaire de la première diode (39) et à l'accumulateur (32) et au côté secondaire à une deuxième position de commutation, **en ce que** la première diode (39) laisse passer un flux de courant de la batterie (22) vers le consommateur à forte charge (34) mais bloque un flux de courant en sens inverse, **en ce qu'**une deuxième diode (41) est raccordée entre la languette de commutation (36) et le premier contact de commutation (40), **en ce que** la deuxième diode (41) bloque un flux de courant de l'accumulateur (32) vers le consommateur à forte charge (34) mais laisse passer un flux en sens inverse, **en ce qu'**il est prévu un appareil de commande (46) qui est conçu pour commander et actionner la position de commutation du commutateur (38) entre la première et la deuxième position de commutation, et **en ce qu'**il est prévu pour détecter la puissance électrique actuelle (44) du consommateur à forte charge (34) un dispositif qui est associé au consommateur à forte charge (34) et est relié du côté sortie à l'appareil de commande (46).

2. Système de réseau électrique de bord selon la revendication 1, **caractérisé en ce que** l'une des deux bornes du côté primaire est reliée à l'une des deux bornes du côté secondaire du convertisseur (30).

3. Système de réseau électrique de bord selon l'une des revendications précédentes, **caractérisé en ce qu'**il est prévu dans l'appareil de commande (46) au moins un seuil de commutation, et **en ce que** l'appareil de commande (46) est conçu pour positionner le commutateur (38) à la première position de commutation lorsque la puissance requise du consommateur de forte puissance (34) est inférieure à 40 à 60% de la puissance nominale et pour le positionner à la deuxième position de commutation lorsque la puissance requise est supérieure à 40 à 60% de la puissance nominale ou varie deux fois en une seconde de plus de 10% de la puissance nominale.

4. Système de réseau électrique de bord selon la revendication 1, **caractérisé en ce que** l'une des deux bornes du côté primaire est reliée à l'une des deux bornes du côté secondaire du convertisseur (30), et **en ce que** la liaison est reliée à la masse.

5. Système de réseau électrique de bord selon la revendication 1, **caractérisé en ce qu'**il est prévu dans l'appareil de commande (46) au moins un seuil de commutation, et **en ce que** l'appareil de commande (46) est conçu pour positionner le commutateur (38) à la première position de commutation lorsque la puissance requise du consommateur à forte puissance (34) est inférieure à 40 à 60% de la puissance nominale et pour le positionner à la deuxième position de commutation lorsque la puissance requise est supérieure à 40 à 60% de la puissance nominale ou varie plus de deux fois en une seconde de plus de 10% de la puissance nominale.
